## Europäisches Patentamt
## European Patent Office
## Office européen des brevets

(19)

(11) Numéro de publication: **0 176 392**
**B1**

(12)

# FASCICULE DE BREVET EUROPEEN

(45) Date de publication du fascicule du brevet:
**26.10.88**

(51) Int. Cl.⁴: **B 01 D 9/02,** C 13 F 1/02

(21) Numéro de dépôt: **85401655.7**

(22) Date de dépôt: **19.08.85**

(54) **Procédé et dispositif de cristallisation continue, notamment du saccharose.**

(30) Priorité: **20.08.84 FR 8412977**

(43) Date de publication de la demande:
**02.04.86 Bulletin 86/14**

(45) Mention de la délivrance du brevet:
**26.10.88 Bulletin 88/43**

(84) Etats contractants désignés:
**AT BE CH DE FR GB IT LI NL SE**

(56) Documents cités:
**EP - A - 0 065 775**
**DE - B - 1 567 300**
**DE - C - 259 990**
**FR - A - 1 324 801**
**FR - A - 1 358 472**
**FR - A - 1 562 583**
**FR - A - 1 581 088**
**FR - A - 2 142 184**
**FR - A - 2 197 067**
**US - A - 4 160 812**

(73) Titulaire: **Langreney, François, 49,rue de Boulainvilliers,**
**F-75016 Paris (FR)**

(72) Inventeur: **Langreney, François, 49,rue de**
**Boulainvilliers, F-75016 Paris (FR)**

(74) Mandataire: **Thevenet, Jean-Bruno et al, Cabinet BEAU**
**DE LOMENIE 55 rue d'Amsterdam, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

Procédé et dispositif de cristallisation continue, notamment du saccharose.

L'invention concerne la cristallisation continue, et principalement la cristallisation du saccharose.

La cristallisation continue du saccharose s'opère dans des cristallisateurs-évaporateurs dans lesquels on réalise le grossissement de cristaux, provenant de l'extérieur, ou produits dans le cristalliseur par nucléation controlée. Ces cristaux sont nourris, tout au long de leur parcours, par une liqueur aqueuse sucrée, concentrée mais sous-saturée, que l'on sursature par évaporation à l'intérieur de l'appareil.

Lorsque la nucléation n'est pas réalisée dans l'appareil lui-même, on la réalise dans un appareil séparé, et l'on obtient une masse-cuite de «pied», contenant les petits cristaux que l'on va faire grossir dans le cristalliseur continu.

On rappelle qu'on appelle «masse-cuite» dans la terminologie sucrière le mélange constitué par les cristaux (phase solide) et l'eau-mère sursaturée qui les entoure (phase liquide).

On peut également produire un «pied» avec des cristaux de petite taille que l'on mélange avec une liqueur sursaturée, le mélange étant dénommé «magma».

Les cristallisateurs continus sont généralement des réacteurs horizontaux, compartimentés ou non, contenant un échangeur de chaleur, alimenté par de la vapeur, afin de provoquer l'ébullition de la masse-cuite.

De tels réacteurs compartimentés sont connus par exemple dans les brevets français n° 1581088 et 2154898.

Des réacteurs continus non compartimentés sont connus par exemple par les brevets français n° 2 144 945 et 2 305 496 au nom du Demandeur.

L'ébullition obtenue à basse température grâce au vide (ou plus exactement aux pressions subatmosphériques) régnant dans l'appareil, est nécessaire pour ne pas dégrader les sucres et impuretés organiques qui les accompagnent. Elle permet de concentrer la masse-cuite, diluée par la solution nourricière qui est fournie tout au long du parcours.

Ainsi l'opération de cristallisation, en sucrerie ou raffinerie, a un double but. Elle permet de séparer le saccharose d'une solution contenant, outre du saccharose, d'autres produits solubles dénommés «impuretés». Cette opération permet d'obtenir des cristaux beaucoup plus purs que la solution qui a servi à les faire grossir, c'est donc une opération de purification. D'autre part, elle permet d'obtenir du saccharose en phase solide, facile à conserver et à conditionner. Pour des raisons techniques et commerciales, il est important de produire des cristaux de taille régulière.

Le but de l'invention est d'améliorer les procédés et dispositif de cristallisation continue connus, notamment sous le rapport du rendement de cristallisation, et donc de la production.

Pour atteindre ce but, l'invention propose un procédé du type selon lequel on fait progresser le long d'un trajet de traitement dans un réacteur un mélange de cristaux entourés d'eaumère, on alimente le mélange en liqueur nourricière au fur et à mesure de sa progression dans le réacteur, cette liqueur étant destinée à fournir l'apport nécessaire au grossissement des cristaux, et on provoque l'ébullition du mélange, à l'aide d'une surface de chauffage, en vue d'obtenir la concentration du mélange dilué par la liqueur nourricière. Conformément à l'invention, on intensifie, le long du trajet de traitement, le brassage du mélange de manière à maintenir le taux spécifique de cristallisation sensiblement à une valeur constante optimale sur la plus grande partie du trajet, l'intensification du brassage étant obtenue en modifiant le régime d'ébullition du mélange par une augmentation de la surface de chauffage le long du trajet, cette augmentation de surface ainsi que l'alimentation en matière suivant une loi exponentielle en fonction de la longueur du trajet dans le réacteur, l'exposant étant compris de préférence entre 0,625 et 0,75. En effet, comme on l'expliquera plus loin, les recherches et expériences réalisées par le Demandeur ont montré que dans les procédés connus, la progression de la cristallisation s'accompagne d'une augmentation de la viscosité de la masse-cuite freinant le brassage, ce qui conduit en l'absence de tout palliatif, à une évolution défavorable du taux de cristallisation le long du trajet.

Quoique l'ensemble des phénomènes régissant la conduite d'un réacteur de cristallisation soit particulièrement complexe, et que le Demandeur n'entende pas êter lié par les considérations scientifiques qu'on va développer, il semble que l'intérêt de l'invention s'explique au moins en partie comme suit.

Le taux spécifique de cristallisation T est la quantité de matière (saccharose) déposée, par unité de temps, sur l'unité de surface d'un cristal.

Il dépend de quatre facteurs principaux:

1. La pureté de la solution nourricière. Les solutions traitées contiennent toujours des matières minérales ou organiques solubles qui gênent la cristallisation du saccharose. Le taux T baisse avec l'augmentation du pourcentage d'impuretés contenues.

2. La sursaturation de l'eau-mère. Elle doit être maintenue à sa valeur la plus élevée de la zone «métastable» (où les cristaux grossissent mais où de nouveaux cristaux ne se forment pas), c'est-à-dire le plus près possible de la zone «labile» (où de nouveaux cristaux se forment) mais sans l'atteindre pour ne pas risquer la formation de «faux grains». Le taux T est fonction directe de la sursaturation.

3. La température. Le taux T est fonction directe de la température. Le fait de passer de 70 à 80°C double la valeur de T. Mais il ne faut pas monter au-dessus de 90°C en pratique pour ne pas détruire les produits en fabrication, organiques, donc sensibles à la chaleur.

4. Le brassage de la masse-cuite. Lorsque la masse-cuite est immobile, les molécules de saccharose s'approchent de la surface des cristaux, sur lesquels elles vont se fixer, uniquement par un phénomène de diffusion. Comme l'eau-mère est très visqueuse, ce déplacement est lent et limite le taux T.

Un brassage de la masse-cuite permet de mettre, en permanence, en contact des cristaux de nouvelles molécules de saccharose et augmentent la valeur du taux, lequel est presque proportionnel au brassage.

Il y a donc un compromis entre la sursaturation, qui provoque une augmentation de la viscosité et freine le brassage, et ce dernier, pour, à une certaine température, atteindre la valeur optimum du taux de cristallisation.

La masse de produit déposé sur un cristal dans le temps est égale au produit de sa surface par le taux cristallisation. Pour obtenir le meilleur rendement d'un cristalliseur, il faut optimiser le taux et maintenir toujours la plus grande surface de fixation possible, c'est-à-dire le plus de cristaux possible.

On pourrait être tenté de remplir le réacteur du plus grand nombre possible de cristaux de très petite taille, ce qui conduit à une plus grande surface qu'avec de gros cristaux peu nombreux. Néanmoins les contraintes commerciales et, dans certains cas techniques, font que la taille finale des cristaux est toujours déterminée et que le grossissement est limité, pour les mêmes raisons à un rapport de taille compris entre 1,4 et 3 (rappord des longueurs de cristal).

Un cristalliseur continu bien mené doit donc contenir, au sein de la masse-cuite qu'il contient, le maximum de cristaux, depuis le début jusqu'à fin du parcours.

Le Demandeur a découvert que cette quantité de cristaux, nommée «pourcentage» ou «rendement» en cristaux, de la masse-cuite, provoque une compacité (viscosité) croissante, qui fait que le brassage de la masse-cuite est diminué dans des proportions inacceptables pour maintenir le taux de cristallisation à sa meilleure valeur (à noter qu'en toute fin de parcours on peut et même on doit laisser le rendement en cristaux augmentre au maximum afin d'épuiser autant que possible l'eau-mère de la masse-cuite, pour l'opération dite de serrage).

Il résulte en effet d'études que la viscosité suit sensiblement une loi logarithmique en fonction de la longueur du trajet dans le réacteur, loi marquée par une forte augmentation de la pente à partir d'une centaine longueur. Inversement, le coefficient de transmission de chaleur subit donc une chute assez brutale au même moment. Cette variation, en fonction de la conduite du réacteur peut facilement faire que le coefficient de transmission de chaleur tombe en fin de parcours à 10% voire 1% de ce qu'il est au début.

Cette chute du coefficient de transmission de chaleur entraîne, en l'absence de remèdes, la quasi-impossibilité de maintenir le taux de cristallisation à sa valeur optimale, c'est-à-dire à la valeur où l'alimentation en matière à cristalliser est exactement ajustée au potentiel de croissance de la surface des cristaux.

L'invention pallie la chute du coefficient de transmission de chaleur par une intensification progressive du brassage le long du trajet, pendant le processus de cristallisation.

Cette intensification du brassage se fait par l'intensification du pouvoir évaporatoire le long du trajet. Dans les appareils connus, le pouvoir évaporatoire est sensiblement constant, par construction, sur le trajet de cristallisation (c'est-à-dire à l'exception éventuelle du tout début du parcours ou de l'extrême fin du parcours).

Conformément à l'invention, on modifie le régime d'ébullition par une augmentation de la surface de chauffe, le long du trajet de cristallisation.

Cette solution consiste donc à moduler, par construction, la surface de chauffe, le long du parcours de la masse-cuite, de telle manière que compte-tenu de la variation du coefficient de transmission de chaleur, l'on alimente l'appareil en maintenant sensiblement constant le rendement en cristaux, sur la plus grande partie du parcours de la masse-cuite.

Cette modulation se fait pour chaque compartiment ou groupe de compartiments pour les appareils compartimentés et par zones successives ou d'une manière complètement continue dans les appareils non compartimentés.

Cette modulation peut être obtenue:

– par modification du profil et/ou du nombre des plaques chauffantes si ce sont des éléments de ce type qui constituent l'échangeur thermique.
– par changement du diamètre des tubes, de la longueur et du nombre des épingles horizontales de chauffage pour certains appareils.
– par modification de la hauteur du faisceau tubulaire vertical de chauffage, progressive ou échelonnée.
– par modification du pas et/ou du diamètre des tubes qui constituent le faisceau tubulaire (c'est-à-dire une modification de la densité de section de tube).

La modulation de la surface de chauffe peut être le résultat de l'une ou de la combinaison de plusieurs de ces mesures.

Cette solution, surtout dans sa dernière variante, est très facile à réaliser et concrétise le but recherché sans provoquer de surcoût dû à du matériel supplémentaire.

Le rapport surface de chauffe sur volume de masse-cuite doit donc être une fonction croissante du temps de parcours de la masse-cuite au sein du réacteur. L'augmentation de ce rapport entre le début de parcours de cristallisation et la fin peut être dans une proportion de 1 à 3. Le chauffage peut être encore augmenté dans la toute dernière étape pour le serrage de la masse-cuite.

Enfin, afin d'améliorer le coefficient de transmission de chaleur lorsque l'on travaille des produits de forte compacité, il peut être intéressant de favoriser le brassage en installant des appareils mécaniques destinés à forcer la circulation de la masse-cuite à travers les éléments chauffants et augmenter ainsi l'efficacité de l'échange thermique.

Les appareils utilisés peuvent être des pompes ou des hélices installées à l'extérieur, ou de préférence à l'intérieur de l'appareil.

La puissance utilisée par ces circulateurs est compensée par l'économie de surface de chauffe qu'elle entraîne.

Bien que la viscosité suive une loi logarithmique en fonction de la longueur du trajet dans le réacteur (courbe présentant une partie sensiblement plane jusqu'à une certaine longueur, puis une forte augmentation de pente à partir de cette longuer), le Demandeur a découvert qu'il convient que la loi d'alimentation en matière (saccharose) soit exponentielle en fonction du trajet, afin de maintenir un rendement en cristaux constant et optimum tout le long du parcours de cristallisation.

Cette alimentation est avantageusement fonction d'une puissance de la longueur du trafjet comprise entre 0,5 et 0,9 et de préférence entre 0,625 et 0,75.

Comme on règle l'évolution de l'alimentation sur l'évolution de la surface de chauffe, cela veut dire que la surface de chauffe doit suivre cette loi exponentielle (pour un trajet de section constante).

L'invention concerne également un appareil de cristallisation en continu, du type compartimenté ou non, destiné à la mise en œuvre du procédé de cristallisation présenté ci-dessus.

L'appareil de l'invention comporte des moyens d'intensification du brassage du mélange, le long du trajet de la masse-cuite. Ces moyens qui commandent le régime d'ébullition du mélange comprennent des moyens de chauffage à surface croissante le long du trajet, et le cas échéant:
– des moyens de chauffage à intensité croissante le long du trajet,
– des moyens d'alimentation en liqueur nourricière de concentration décroissante le long du trajet,
– des agitateurs mécaniques.

D'autres caractéristiques et avantages de l'invention ressortiront de la description suivante, donnée à titre d'exemple non limitatif.

Il sera fait référence aux dessins annexés sur lesquels:
– la figure 1 est une coupe radiale verticale I–I d'un réacteur circulaire de l'invention,

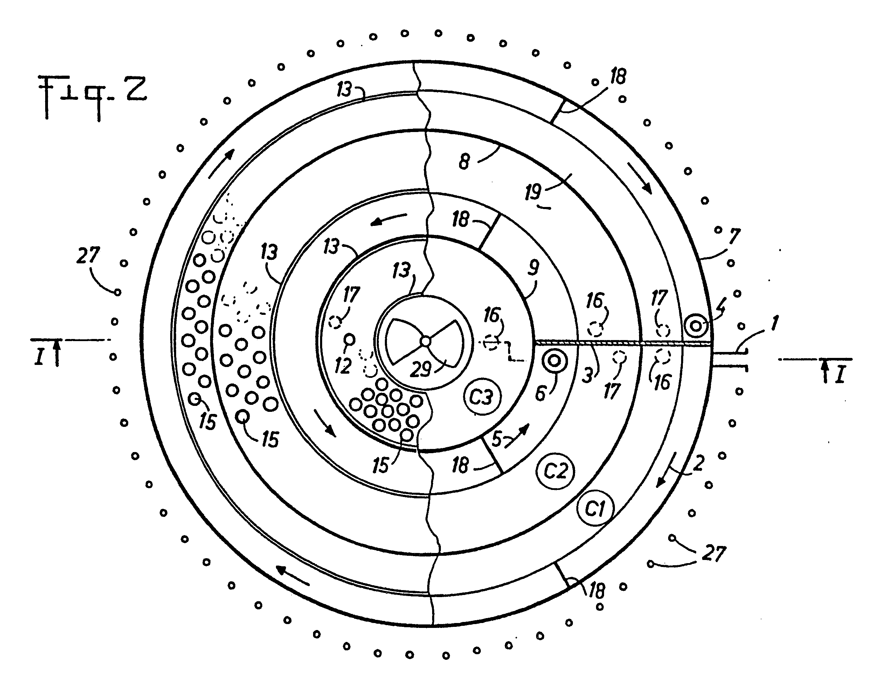

– la figure 2 est une coupe brisée II–II du réacteur de la figure 1.

On a représenté sur les dessins un réacteur continu circulaire non compartimenté. Le principe de base d'un tel réacteur est celui qui a été développé dans le documents FR-A 2 305 496 auquel on se reportera.

Cependant, alors que la description du document précité concerne plus particulièrement – mais non exclusivement – un réacteur rectiligne, on a trouvé préférable pour des raisons d'encombrement et de construction d'adopter un réacteur circulaire.

Le pied ou magma y entre par l'entrée 1, parcourt d'abord le circuit continu externe C1, dans le sens des flèches 2, jusqu'à la cloison radiale 3; la masse-cuite passe par le déversoir 4 dans le circuit continu interne C2 qu'elle parcourt dans le sens des flèches 5, jusqu'à rencontrer à nouveau la cloison radiale 3 et passer par le déversoir 6 dans le compartiment central C3. La masse-cuite s'en échappe par le déversoir 12.

Les circuits et le compartiment central sont délimités par une virole extérieure 7, des viroles intérieures 8 et 9, des fonds coniques 10 et des couvercles coniques 11.

Les faisceaux tubulaires de chauffage sont formés par des parois doubles isolantes 13, les plaques porte-tubes 14 et les tubes 15 dont seuls quelques uns sont représentés. La vapeur de chauffage entre dans les faisceaux par les arrivées 16, et les condensats s'échappent par les sorties 17.

Conformément au document précité FR-A 2 305 496, des chicanes radiales 18 et des déflecteurs ou chapeaux coniques 19 sont prévus pour empêcher les perturbations liées à une ébullition désordonnée de la masse-cuite. Les vapeurs circulent au dessus des compartiments (pouvant passer du compartiment C3 aucx compartiments C2–C1 par des ouvertures 20 prévues dans la virole 9) puis s'échappent par la sortie 21 vers un condenseur barométrique 23.

L'alimentation des circuits C1 et C2 en liqueur nourricière est réalisée à la base des faisceaux tubulaires au moyen des collecteurs 24 et 25, des tubes doseurs 26, des canalisations 27 et des robinets d'isolement 28. Il est prévu une canalisation tous les 6°, soit 30 canalisations pour le circuit C1 et 30 canalisations pour le circuit C2.

Le compartiment C3 comporte un circulateur mécanique 29 de masse-suite.

Pour la mise en œuvre de la modulation de la surface de chauffe chacun des circuits C1 et C2 est divisé en six secteurs consécutifs de 60°. Le nombre des tubes 15 varie dans les secteurs, conformément à l'invention. par exemple, pour un réacteur de 6,75 m de diamètre, il est prévu dans les 6 premiers secteurs toriques du premier circuit (diamètre interne 5240 mm et externe 6280 mm) 57, 67, 77, 83, 88, 92 tubes de 10 cm de diamètre; le pas des tubes va naturellement en décroissant avec les secteurs. Pour les six secteurs suivants du circuit C2 (diamètre interne 3820 mm, et externe 5240 mm) on a respectivement 92, 98, 104, 104, 108, 108 tubes de même diamètre. Le faisceau du compartiment central (tore de diamètre interne 1200 mm et externe 2996 mm) compte 331 tubes de même diamètre.

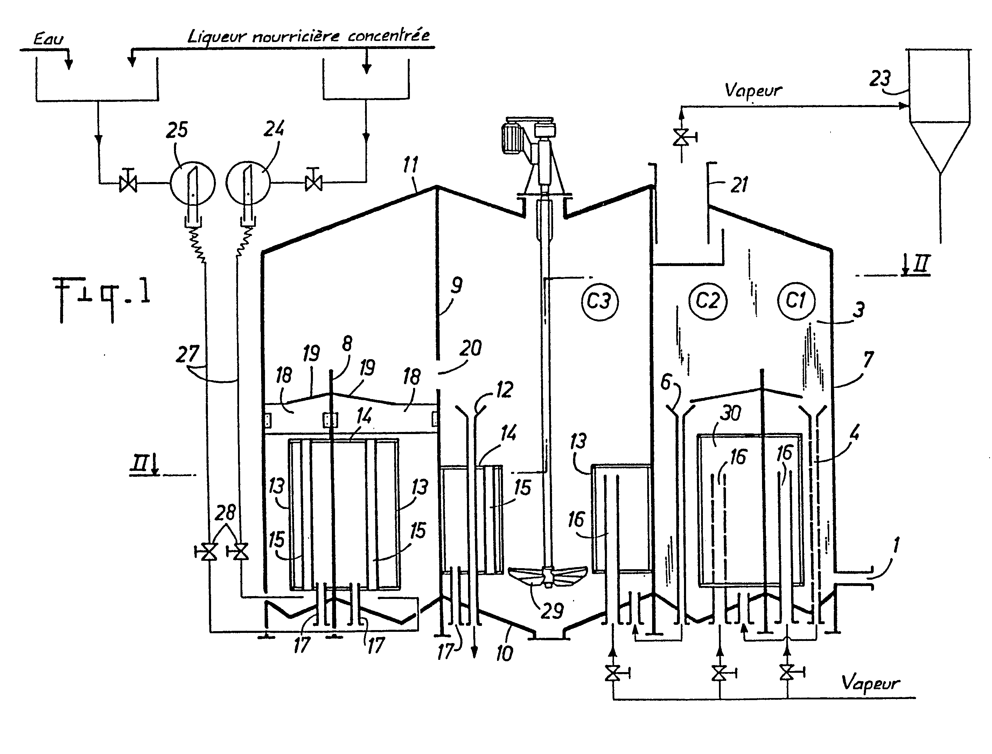

A la modulation de la surface de chauffe, on a combiné la différence de concentration de la liqueur nourricière puisque, comme le montre la figure 1, le collecteur 25 est alimenté en liqueur nourricière diluée par rapport au collecteur 24.

Naturellement, cette concentration décroissante peut se faire secteur par secteur, ou par groupe de secteurs.

Les faisceaux tubulaires peuvent aussi être compartimentés par des cloisons radiales 30, correspondant ou non aux secteurs toriques précédemment définit et alimentés sélectivement en vapeur de manière à moduler l'intensité du chauffage.

L'évolution de la surface de chauffe le long du trajet est gouvernée par les considérations suivantes.

La masse élémentaire de saccharose qui peut être absorbée par les cristaux qui traversent une section quelconque des circuits C1 ou C2, dans un temps dt est:

dm = S. T. dt
où dm = masse de saccharose,
S = surface des cristaux traversant la section,
T = taux spécifique de cristallisation.

La théorie, confirmée par l'expérience, montrent que l'on a intérêt à conserver, tout au long des circuits C1 et C2 le maximum de cristaux compatibles avec une bonne circulation, donc une valeur assez élevée mais pas exagérée pour que la «patosité» (mesurée par rhéologie) ne devienne pas prépondérante pour la viscosité de la masse-cuite.

Ensuite, il faut optimiser T. Là aussi il y a un compromis car si l'on sursature très fort la viscosité augmente tellement que la masse-cuite circule mal et que T diminue.

Le Demandeur cherche à travailler tout au long de C1 et C2 dans la partie plate de la courbe de viscosité précédemment évoquée et de serrer la masse-cuite, et donc de s'engager dans la partie fortement infléchie, uniquement dans le compartiment C3, qui, muni de circulateur mécanique, est apte à ce dur travail.

Par ailleurs, il a été découvert que la loi de Mac Cabee (allongement constant d'un cristal dans le temps) est valable pour des essais en laboratoire sur cristauc isolé mais pas dans une masse-cuite. En effet, il semble que, vu la viscosité de l'eaumère des produits traités en sucrerie, la pesanteur ne provoque pas de déplacement du cristal dans la masse avant qu'il n'atteigne sensiblement 100 μm. A partir de cette taille la pesanteur agit, le cristal se déplace et trouve des zones plus riches et son T augmente.

D'après les comparaisons faites par le Demandeur sur les appareils discontinus, il semble que T = f(l) (l = longueur du cristal) dans la zone habituelle en industrie, comprise entre 0,1 et 1,0 mm.

Pour certains chercheurs, $T = 1,302.10^{-4} \sqrt{1} = f(1)^{0,5}$. Il est très probable que la vérité se situe entre les deux exposants: 1 et 6.5. Pour un cristalliseur ayant des circuits de parcours de masse-cuite de section constante et dans lequel on conserve un rendement en cristaux constant, l'équation qui permet de déterminer la taille d'un (ou des) cristaux en une section Z du parcours est:

l1 = lo [(4a/lovo) Z + 1] 0,25, dans laquelle:
l1 = taille des cristaux à la section Z,
lo = taille initiale des cristaux introduits,
a = allongement spécifique moyen des cristaux, entre lo et l1, vo = vitesse initiale de la masse-cuite due à l'introduction du magma (ensemencement).

Comme $S = k.l^2$ (k = coef. de forme), la surface de cristaux qui traverse la section de l'appareil au point Z sera:

$S = f [(kZ)^{0,25}]^2 = f (kZ)^{0,5}$
(en éliminant 10, très petit et le 1, négligeable dans l'équation précitée).
Ainsi,
dm/dt = S × T devient:
$dm/dt = f(kZ)^{0,5} \times [(kZ)^{0,25}]^{0,5} = f(kZ)^{0,625}$ si l'on considère l'hypothèse de certains chercheurs et
$dm/dt = f(kZ)^{0,5} \times [(kZ)^{0,25}]^1 = f(kZ)^{0,75}$ si l'on considère les observations du Demandeur.

Il est très probable que la vérité se situe entre les deux exposants: 0,625 et 0,75 et il est intéressant que la courbe de croissance de la surface de chauffe se situe entre ces deux courbes.

Compte-tenu des approximations faites, on peut admettre que les résultats sont encore satisfaisants pour des exposants compris entre 0,5 et 0,9.

Cette loi ne donne que l'évolution de la surface de chauffe le long des circuits C1 et C2, supposés à section constante. Si on faisait une section croissante il faudrait en tenir compte. Le but étant de fournir aux cristaux contenus dans la masse-cuite le saccharose qu'ils sont à même d'absorber, sans excès afin de ne pas diminuer le rendement en cristaux, et sans pénurie pour ne pas ralentir la cristallisation.

La valeur absolue de la surface de chauffe totale à installer est fonction de la quantité d'eau à évaporer, de k et de la température. La loi ci-dessus ne concerne que l'évolution de cette surface, en fonction de Z.

**Revendications**

1. Procédé de cristallisation continue, selon lequel on fait progresser le long d'un trajet de traitement (C1, C2) dans un réacteur un mélange de cristaux entourés d'eau-mère, on alimente le mélange en liqueur nourricière au fur et à mesure de sa progression dans le réacteur, cette liqueur étant destinée à fournir l'apport nécessaire au grossissement des cristaux, et on provoque l'ébullition du mélange, à l'aide d'une surface de chauffage, en vue d'obtenir la concentration du mélange dilué par la liqueur nourricière, caractérisé en ce qu'on intensifie, le long du trajet de traitement (C1, C2), le brassage du mélange de manière à maintenir le taux spécifique de cristallisation sensiblement à une valeur constante optimale sur la plus grande partie du trajet (C1, C2), l'intensification du brassage étant obtenue en modifiant le régime d'ébullition du mélage par une augmentation de la surface de chauffage (15) le long du trajet (C1, C2), cette augmentation de surface ainsi que l'alimentation en matière suivant une loi exponentielle en fonction de la longueuer du trajet dans le réacteur, l'exposant étant compris de préférence entre 0,625 et 0,75.

2. Dispositif de cristallisation continue pour la mise en œuvre du procédé selon la revendication 1, du type comprenant un réacteur définissant un trajet de traitement (C1, C2) pour un mélange de cristaux entourés d'eau-mère, des moyens (24–28) 'alimentation du mélange en liqueur nourricière disposés le long du trajet (C1, C2) et une surface de chauffage (15) destinée à provoquer l'ébullition du mélange, caractérisé en ce que la surface de chauffage (15) est prévue, par construction, croissante le long du trajet (C1, C2) suivant une loi exponentielle en fonction de la longueur du trajet dans le réacteur, l'exposant étant compris de préférence entre 0,625 et 0,75.

3. Dispositif selon la revendication 2, caractérisé en ce que la surface de chauffe est constituée de faisceaux de tubes (15) de densité croissante le long du trajet (C1, C2).

4. Dispositif selon l'une quelconque des revendications 2 ou 3, caractérisé en ce que le réacteur est circulaire.

**Patentansprüche**

1. Verfahren zur kontinuierlichen Kristallisation, gemäss dem man längs einer Behandlungsbahn (C1, C2) in einem Reaktionsgefäss ein Gemisch von mit Mutterlauge umgebenen Kristallen vorrücken lässt, man das Gemisch im Masse seines Vorrückens im Reaktionsgefäss mit Nährflüssigkeit speist, welche zum Liefern des für die Vergrösserung der Kristalle erforderlichen Zusatzes bestimmt ist und man das Sieden des Gemisches mit Hilfe einer Heizoberfläche bewirkt, um die Konzentrierung des durch die Nährflüssigkeit verdünnten Gemisches zu erreichen, dadurch gekennzeichnet, dass man längs der Behandlungsbahn (C1, C2) das Rühren des Gemisches derart verstärkt, um den spezifischen Kristallisationsanteil über den grössten Teil der Bahn (C1, C2) praktisch auf einem optimalen konstanten Wert zu halten, wobei die Verstärkung des Rührens erhalten wird, indem man den Siedebereich des Gemisches durch eine Vergrösserung der Heizoberfläche (15) längs der Bahn (C1, C2) verändert, und wobei diese Oberflächenvergrösserung sowie die Speisung mit Material einem exponentiellen Gesetz als Funktion der Länge der Bahn im Reaktionsgefäss folgen und der Exponent vorzugsweise im Bereich von 0,625 bis 0,75 liegt.

2. Vorrichtung zur kontinuierlichen Kristallisation zum Durchführen des Verfahrens nach dem Anspruch 1, des Typs mit einem Reaktionsgefäss, das eine Behandlungsbahn (C1, C2) für ein Gemisch von mit Mutterlauge umgebenen Kristallen begrenzt, Mitteln (24–28) zum Speisen des Gemisches mit Nährflüssigkeit, die längs der Bahn (C1, C2) angeordnet sind, und einer zum Bewirken des Siedens des Gemisches bestimmten Heizoberfläche (15), dadurch gekennzeichnet, dass die Heizoberfläche (15) durch Konstruktion längs der Bahn (C1, C2) nach einem exponentiellen Gesetz als Funktion der Länge der Bahn im Reaktionsgefäss wachsend vorgesehen ist, wobei der Exponent vorzugsweise im Bereich von 0,625 bis 0,75 liegt.

3. Vorrichtung nach dem Anspruch 2, dadurch gekennzeichnet, dass die Heizoberfläche aus Bündeln von Rohren (15) von längs der Bahn (C1, C2) wachsender Dichte gebildet ist.

4. Vorrichtung nach irgendeinem der Ansprüche 2 oder 3, dadurch gekennzeichnet, dass das Reaktionsgefäss kreisförmig ist.

**Claims**

1. Method of continuous-process crystallization, in which a mixture of crystals surrounded by mother liquor is urged along a process path (C1, C2) through a reactor, feeding liquor is supplied to the mixture throughout the process path, said feeding liquor providing the nourishment required for crystal growth, and the mixture is brought to a boil with the help of a heating surface in order to bring about a concentration of the mixture diluted by the feeding liquor, characterized in that stirring of the mixture is intensified along the process path (C1, C2) in order to keep the specific rate of crystallization to a substantially constant optimum value over most of the process path (C1, C2), said intensifying of the stirring being obtained by modifying the mixture boiling rate by an increase of the heating surface (15) along the process path (C1, C2), said surface increase as well as the supply of matter following an exponential distribution as a function of the length of the process path inside the reactor, the exponent preferably ranging between 0.625 and 0.75.

2. Continuous-process crystallizing device for carrying out the method according to claim 1, of the type comprising a reactor defining a process path (C1, C2) for a mixture of crystals surrounded by mother liquor, means (24–28) arranged along the process path for supplying feeding liquor to said mixture and a heating surface (15) designed to cause said mixture to boil, characterized in that the heating surface (15) is provided, by construction, so as to increase along the path (C1, C2) according to an exponential distribution as a function of the length of the path inside the reactor, the exponent being preferably between 0.625 and 0.75.

3. Device according to claim 2, characterized in that the heating surface is constituted of bundles of tubes (15) of density increasing along the path (C1, C2).

4. Device according to any one of claims 2 or 3, characterized in that the reactor is circular.

Fig.1

Eau

Liqueur nourricière concentrée

Vapeur

23

25 24

27

28

17 17 17 10 29

11 9 20 8 19 19 18 18 14 13 13 15 15 12 14 15 13 16

C3 C2 C1

21 3 7 6 30 16 16 4 1

Vapeur

0 176 392

Fig. 2